# FASCICULE DE BREVET EUROPEEN

(11) **EP 2 177 559 B1**
(45) Date de publication et mention de la délivrance du brevet: **30.11.2011**
(21) Numéro de dépôt: 09290757.5
(22) Date de dépôt: 02.10.2009
(51) Int. Cl.: H01M 4/88, H01M 4/86, C08J 9/26, B01D 67/00

(54) **Procédé de formation de pores dans une matrice polymère**
Verfahren zur porenbildung in einer polymermatrix
Process for pore formation in a polymer matrix

(30) Priorité: 20.10.2008 FR 0805789
(43) Date de publication de la demande: 21.04.2010
(73) Titulaire: Commissariat à l'Énergie Atomique et aux Énergies Alternatives, 75015 Paris (FR)
(72) Inventeur: Morin, Arnaud, 38100 Grenoble (FR); Gentile, Pascal, 38500 Voiron (FR); Pauc, Nicolas, 38100 Grenoble (FR)
(74) Mandataire: Noel, Chantal Odile

(56) Documents cités:
- WO-A-01/70873
- WO-A-03/058734
- WO-A-2006/062947
- WO-A-2007/119349
- CN-A- 101 237 059
- JP-A- 2005 285 496
- KOUKHARENKO E ET AL: "Towards a nanostructured thermoelectric generator using ion-track lithography" JOURNAL OF MICROMECHANICS & MICROENGINEERING, INSTITUTE OF PHYSICS PUBLISHING, BRISTOL, GB, vol. 18, no. 10, 1 octobre 2008 (2008-10-01), pages 1-9, XP020144998 ISSN: 0960-1317
- GENTILE P ET AL: "The growth of small diameter silicon nanowires to nanotrees" NANOTECHNOLOGY 20080326 INSTITUTE OF PHYSICS PUBLISHING; DIRAC HOUSE GB,, vol. 19, no. 12, 26 mars 2008 (2008-03-26), XP002522636
- WOONG KIM AND AL: "Fabrication of a porous polyimide membrane using a silicon nanowire array as a template" MATERIALS LETTERS, vol. 63, 2009, pages 933-936, XP002527532

## Description

L'invention concerne un procédé de formation de pores de forme, dimensions et répartition contrôlées dans une matrice polymère. Elle concerne également une pile à combustible à membrane échangeuse de protons.

La formation de pores de forme, dimensions et répartition contrôlées dans une matrice polymère est importante dans un grand nombre d'applications telles que celles mettant en oeuvre des dispositifs électrochimiques (capteur, batterie,...) ou tout système nécessitant un matériau poreux comme les filtres. WO 0 170 873 décrit un procédé de formation de pores dans une matrice polymère par élimination de copolymères.

En particulier, elle est importante pour la fabrication des couches actives de pile à combustible à membrane échangeuse de protons.

Les couches actives des piles à combustible à membrane échangeuse de protons sont le siège des réactions électrochimiques, c'est-à-dire, d'oxydation de l'hydrogène (pour l'anode) et de réduction d'oxygène (pour la cathode) qui mènent à la production d'eau. Ces réactions se déroulent dans des zones où coexistent un catalyseur permettant l'accélération des cinétiques des réactions, un conducteur électronique pour la collecte des électrons, un conducteur protonique et les réactifs gazeux.

La couche active est donc un matériau composite qui doit être:
- conductrice protonique pour permettre le transport des protons de la membrane aux sites réactifs
- conductrice électronique pour permettre le transport des électrons des sites réactifs aux collecteurs de courant
- poreuse pour permettre :
   a. l'accès des gaz des plaques monopolaires aux sites réactifs
   b. l'évacuation de l'eau des sites réactifs aux plaques monopolaires.

Les couches actives sont le lieu de couplage des phénomènes de transport des électrons, des protons, des gaz et de l'eau liquide.

Dans une couche active, la surface électroactive doit être la plus importante possible pour une surface géométrique et un chargement en catalyseur donnés afin d'obtenir les performances les plus intéressantes.

A l'heure actuelle, le catalyseur employé est généralement le platine et se présente sous forme de particules sphériques dont le diamètre est de l'ordre de quelques nanomètres afin d'augmenter au maximum la surface catalytique pour une masse de platine donnée. Ces particules de catalyseur sont déposées sur des particules de carbone dont le diamètre est de l'ordre de quelques dizaines de nanomètres (de 20 à 80 nm inclus) qui peuvent se présenter sous forme d'agglomérats. Le catalyseur peut être aussi sous forme de film plan ou structuré. L'ensemble est généralement appelé "carbone platiné" ou "Pt/C". Ce substrat conducteur a été choisi en raison de sa stabilité chimique et de son coût. Le conducteur protonique est un ionomère, c'est-à-dire un électrolyte polymère (par exemple de type perfluorosulfoné). Le mélange de ces composants mène à une structure poreuse.

Habituellement, les couches actives sont réalisées de deux façons différentes :
- l'ionomère et le carbone platiné sont mis en suspension dans des solvants. Cette suspension, appelée encre, est ensuite déposée sur la membrane ou sur la couche de diffusion pour former les couches actives après évaporation des solvants. La structure obtenue est poreuse.
- l'ionomère est imprégné (par exemple par pulvérisation) sur une couche poreuse préalablement fabriquée, contenant le carbone platiné et un liant polymère non conducteur protonique.

D'un point de vue de la structure, dans ces couches actives, l'ionomère recouvre les particules de carbone platiné. Dès lors, les gaz doivent traverser l'ionomère avant d'atteindre les sites réactifs. Ceci a pour conséquence de limiter l'accès des gaz aux sites catalytiques et donc de diminuer les performances de la pile.

Par ailleurs, la répartition de l'ionomère et du platine est mal maîtrisée et peut conduire à une mauvaise utilisation du catalyseur.

Enfin, il est difficile de maîtriser la structure de la couche active (diamètre des pores, répartition, surface électroactive) et donc de la surface électroactive avec ces méthodes de fabrication imposées par la nature du catalyseur employé.

Dans ce contexte, l'invention propose un procédé de formation de pores de forme, dimensions et répartition contrôlées dans une matrice polymère qui, lorsque appliqué en particulier à la fabrication de couches actives de pile à combustible à membrane échangeuse de protons, permet d'obtenir une couche active dans laquelle les gaz n'ont pas à traverser l'ionomère afin d'atteindre la surface réactive du catalyseur.

A cet effet, l'invention propose un procédé de formation de pores de forme, dimensions et répartition contrôlées dans une matrice polymère, caractérisé en ce qu'il comprend :
- une étape d'enrobage de nanofils et/ou de nanoarbres de silicium dans la matrice polymère non polymérisée ou en suspension ou en solution dans au moins un solvant,
- une étape de durcissement de la matrice polymère, et
- une étape d'élimination des nanofils et/ou nanoarbres de silicium par traitement chimique.

Dans un mode de réalisation préféré de l'invention la matrice polymère comprend au moins un ionomère.

Le plus préférablement, la matrice polymère est constituée d'un inonomère.

Plus précisément, et de préférence, le ionomère est un polymère perfluorosulfoné.

Le procédé de formation de pores dans une matrice polymère peut comprendre l'étape de croissance des nanofils et/ou nanoarbres du silicium, qui est réalisée sur un support, le support étant alors retiré entre l'étape de durcissement de la matrice polymère et l'étape d'élimination des nanofils et/ou nanoarbres du silicium par traitement chimique.

L'invention propose également un procédé de fabrication d'une couche active de pile à combustible à membrane échangeuse de protons, caractérisé en ce qu'il comprend :
a) une étape de formation de pores de forme, dimensions et répartition contrôlées dans une matrice polymère par le procédé selon l'invention et dans lequel la matrice polymère comprend ou, de préférence, est constituée d'un ionomère, et
b) une étape de dépôt d'au moins un catalyseur dans les pores formés.

L'invention propose aussi un procédé de fabrication d'une couche active de pile à combustible à membrane échangeuse de protons caractérisé en ce qu'il comprend
a) une étape de formation de pores de forme, dimensions et répartition contrôlées dans une matrice polymère selon le procédé de l'invention et dans lequel la matrice polymère comprend ou, de préférence, est constituée d'un ionomère, et
b) une étape de dépôt d'au moins un catalyseur sur les nanofils et/ou nanoarbres avant l'étape d'enrobage de ces nanofils et/ou nanoarbres dans la matrice polymère.

L'invention sera mieux comprise et d'autres avantages et caractéristiques de celle-ci apparaîtront plus clairement à la lecture de la description explicative qui suit et qui est faite en référence aux figures dans lesquelles :
- la figure 1 représente schématiquement des nanofils de silicium,
- la figure 2 représente schématiquement des nanoarbres de silicium,
- la figure 3 représente schématiquement des nanofils de silicium après leur croissance sur un support,
- la figure 4 représente schématiquement des nanofils de silicium liés à leur support et recouverts de particules de catalyseur,
- la figure 5 représente schématiquement des nanofils de silicium liés à leur support et recouverts de particules de catalyseur, enrobés dans une matrice polymère constituée d'un ionomère,
- la figure 6 représente un assemblage à trois couches constitué de deux couches actives selon la figure 5 séparées par une membrane conductrice protonique,
- la figure 7 représente l'assemblage à trois couches à porosité ouverte de la figure 6 après retrait des supports de chaque couche active, et
- la figure 8 représente l'assemblage à trois couches selon l'invention, dans lequel chaque couche active a une porosité ouverte, obtenu après élimination des nanofils dans l'assemblage à trois couches représenté en figure 7.

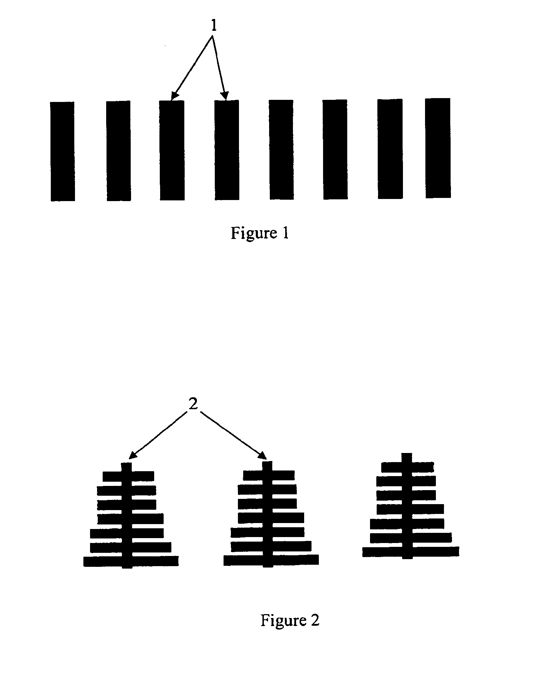

Dans la présente description ainsi que dans les revendications :
- les termes « nanofils » désignent des fils ayant au moins une dimension inférieure à 100 nm, tels que ceux représentés en figure 1, où ils sont notés 1,
- les termes « nanoarbres » représentent des structures ramifiées telles que celles représentées en figure 2, où elles sont notées 2, dont chaque ramification a au moins une dimension inférieure à 100 nm,
- le terme « durcissement » se réfère aussi bien à la polymérisation d'une matrice polymère, quelque soit le type de polymérisation impliqué, c'est-à-dire qu'il s'agisse d'une polymérisation thermique, d'une photo polymérisation, d'une polymérisation chimique qu'au durcissement par évaporation du ou des solvants dans lequel la matrice polymère non polymérisée a été mise en suspension ou en solution,
- les termes « matrice polymère non polymérisée » se réfèrent à une matrice polymère non durcie ou en suspension ou en solution dans un ou plusieurs solvants. Il peut s'agir d'une solution ou d'une suspension à viscosité très faible ou encore à viscosité plus élevée, l'essentiel étant que la viscosité de la matrice polymère non durcie puisse lui permettre d'être coulée, ou vaporisée etc...sur un support,
- le terme « ionomère » désigne, de manière connue, un électrolyte polymère ayant des propriétés de conduction ionique.

L'invention repose sur l'utilisation de structures à base de silicium, comme moule "perdu", c'est-à-dire qui sera éliminé en fin de procédé, pour la formation de pores de forme, dimensions et répartition contrôlées.

Ces structures à base de silicium sont formées de nanofils et/ou nanoarbres de silicium.

Les pores peuvent donc être linéaires lorsqu'ils sont réalisés à partir de nanofils ou ramifiés lorsqu'ils sont réalisés à partir de structures ramifiées en silicium ou encore peuvent former une structure mixte de pores linéaires et de pores ramifiés.

Ainsi, le procédé de formation de pores de forme, dimensions et répartition contrôlées, dans une matrice polymère selon l'invention, comprend une étape d'enrobage de nanofils et/ou de nanoarbres de silicium dans une matrice polymère non durcie (non polymérisée) ou en suspension ou en solution dans au moins un solvant. Puis, la matrice polymère est durcie et les nanofils et/ou nanoarbres de silicium sont éliminés par traitement chimique.

Avantageusement, le procédé de formation de pores dans une matrice polymère de l'invention comprend, avant l'étape d'enrobage des nanofils et/ou nanoarbres de silicium, une étape de croissance de ces nanofils et/ou nanoarbres.

De préférence, cette étape de croissance est réalisée sur un support qui ne sera pas, lui, enrobé dans la matrice polymère.

Cependant, il apparaîtra clairement à l'homme de l'art que le procédé de formation de pores de l'invention peut être mis en oeuvre avec des nanofils et/ou nanoarbres de silicium déjà formés.

Le procédé de l'invention permet, après retrait du support et élimination des nanofils et/ou nanoarbres de silicium, d'obtenir une structure de pores ouverts.

De façon générale, la matrice polymère sera choisie aussi pour sa capacité à résister aux différentes étapes de fabrication des pores.

Dans un mode de réalisation préféré de l'invention, la matrice polymère comprend un ionomère. Elle est de préférence constituée d'un ionomère tel qu'un polymère de perfluorosulfoné par exemple le Nafion®.

En effet, dans ce cas, on peut fabriquer des couches actives pour piles à combustible à membrane échangeuse de protons en déposant dans les pores d'au moins un catalyseur.

Le dépôt de ce au moins un catalyseur, de préférence le platine, peut être réalisé de deux manières différentes.

La première manière consiste à déposer le platine sur les nanofils et/ou nanoarbres de silicium avant leur enrobage par la matrice polymère.

Après l'élimination des nanofils et/ou nanoarbres de silicium, le catalyseur restera sur les parois et au fond des pores ainsi formés dans la matrice polymère. Le catalyseur ne sera pas entièrement recouvert de matrice polymère, contrairement à ce qui se passait dans l'art antérieur.

Mais le dépôt du catalyseur dans les pores peut être réalisé après la formation des pores, c'est-à-dire après l'élimination de nanofils et/ou nanoarbres de silicium. Là encore, le catalyseur n'est pas complètement recouvert de matrice polymère.

La couche active de piles à combustible à membrane échangeuse de protons obtenue par le procédé de l'invention n'a que des pores ouverts, et uniquement des pores ouverts, ce qui n'avait jamais été obtenu, à la connaissance du demandeur, avant l'invention.

Cette structure à pores uniquement ouverts présente de nombreux avantages.

Tout d'abord, on peut introduire le catalyseur après la formation des pores.

Mais surtout, les gaz réactifs n'ont pas à traverser l'ionomère pour parvenir aux sites catalytiques, contrairement aux structures de l'art antérieur : les gaz passent par la structure poreuse jusqu'au catalyseur, sur lequel les échanges peuvent se faire jusqu'à l'ionomère via la surface du catalyseur sur des distances au maximum de l'ordre du nanomètre. Les électrons sont collectés jusqu'à la surface de la membrane par une couche conductrice électronique pouvant être un catalyseur.

En effet, avec le procédé de l'invention, le catalyseur n'est pas entièrement enrobé dans la matrice polymère, une grande partie de sa surface est libre. Ceci n'était pas obtenu avec les procédés de l'art antérieur où le catalyseur était « enrobé » dans la matrice polymère poreuse qui recouvrait ainsi la plus grande partie de sa surface active.

Par ailleurs, l'eau peut être préférentiellement évacuée par la partie de la surface de la couche active constituée de ionomère et gêne moins les flux de réactifs ayant lieu dans le sens opposé.

Une telle structure à pores ouverts permet une meilleure utilisation du catalyseur, c'est-à-dire de meilleures performances pour une même quantité en masse de catalyseur.

Le catalyseur peut être déposé sous forme de particules, ou encore de film plan ou structuré.

Ainsi, les piles à combustible comportant des membranes comportant de telles couches actives sont également un objet de l'invention.

Afin de mieux faire comprendre l'invention, on va maintenant décrire, à titre d'exemples purement illustratifs et non limitatifs, plusieurs modes de réalisation.

### Exemple 1 : Fabrication d'un assemblage à deux couches actives de pile à combustible à membrane échangeuse de protons comprenant la croissance des structures de silicium.

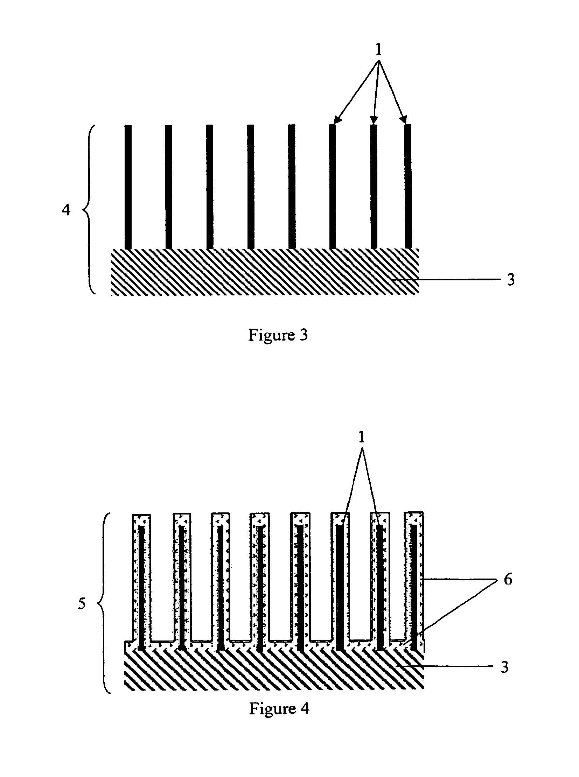

Cet exemple sera décrit en référence aux figures 3 à 8.

### 1) Etape 1 :

Dans la première étape, les structures de silicium, ici des structures comprenant des nanofils, notés 1 en figure 3, sont mises à croître sur un support noté 3 en figure 3.

Le support 3 peut être un métal, un oxyde ou un matériau semiconducteur. Dans cet exemple on utilise un support en silicium. Le silicium peut également être du silicium dopé n ou p, de type <100>, <111> ou <110>.

On obtient une structure supportée, notée 4 en figure 3.

Cette structure de nanofils de silicium 4 est mise à croître, par exemple comme décrit dans P. Gentile et al., Nanotechnologie, 19 (2008) page 125608.

Plus généralement, la croissance des structures de ces nanofils de silicium est réalisée en utilisant une source de matière qui peut être soit des particules de silicium ayant subi une ablation laser, soit un gaz réactif, tel que le silane.

Cette source de matière réagit ensuite avec un catalyseur qui provoque la croissance du nanofil. Les catalyseurs utilisés pour la croissance du nanofil, et ayant les meilleurs rendements, sont habituellement des catalyseurs métalliques se présentant soit sous forme liquide (solutions colloïdales), soit sous forme solide (nano-agrégats). Ces catalyseurs métalliques peuvent être déposés de plusieurs manières, par exemple par simple dépôt de gouttelettes de solution colloïdale, ou par démouillage thermique d'un film mince auto-assemblé préalablement déposé sur le support.

Le catalyseur le plus communément utilisé est l'or, mais d'autres métaux ont été cités dans la littérature comme : le Cuivre, le Titane, le Platine, l'Argent, le Palladium et le Nickel. C'est le diamètre du catalyseur qui détermine et impose le diamètre du nanofil de silicium obtenu.

Le mécanisme de croissance se déroule comme suit.

Tout d'abord, le gaz réactif crée un apport de matière continu au sein de l'agrégat de catalyseur qui voit alors sa composition changer jusqu'à ce qu'il soit sursaturé par le produit de décomposition du gaz réactif (silicium pour le silane, germanium pour le germane etc...). Lorsque la sursaturation est acquise, l'apport de matière continu provenant de la source de gaz réactif est déposé et croît, par précipitation, sous la forme d'une colonne de matériau solide, le plus souvent cristallin, à la base du catalyseur. La forme finale du dépôt est donc un nanofil, plein et solide, chapeauté par un agrégat de catalyseur à son extrémité active. La longueur du fil peut être ajustée en variant le temps d'exposition au gaz réactif. Un exemple de procédé type de fabrication de nanofils de 5 à 20 nm de diamètre, par la méthode VLS (Vapeur Liquide-Solide) dans un réacteur de dépôt chimique en phase vapeur (CVD) est décrit ci-après:
a) Préparation du support: Silicium <111>, Nettoyage dans bain d'acétone, puis alcool iso-propylique, suivi d'une désoxydation de la surface par trempage 2mn dans du HF-NH₄F.
b) Dépôt du catalyseur: Colloïde d'or de 5 à 20 nm de diamètre, trempage du support dans la solution colloïdale ou par électrodéposition.
c) Le support est introduit dans le réacteur CVD (Chemical Vapor Deposition), puis chauffé à une montée en température à 550°C sous un flux d'hydrogène de 41/mn à 20 mbar.
d) Croissance des nanofils : introduction du silane à 50 cm³/s à 550°C avec 41/mn d'H₂ et 20 mbar de pression. Toutes autres conditions fixées, la longueur des nanofils sera imposée par la durée du dépôt
e) Arrêt de la croissance : arrêt du silane et refroidissement sous flux d'H₂
f) On peut au final retirer le catalyseur se trouvant au sommet du nanofils par voie chimique : trempage du support dans une solution d'attaque du métal catalyseur: exemple iodure de potassium pour l'or.

### 2) Etape 2 :

La deuxième étape du procédé de fabrication d'un assemblage à deux couches actives selon l'invention consiste à déposer le catalyseur, par dépôt chimique en phase vapeur, dépôt chimique en phase vapeur assisté par plasma ou encore par voie chimique du catalyseur, noté 6 en figure 4, ici du platine, sur la surface des nanofils de silicium.

Par ces méthodes de dépôt bien connues, on recouvre des surfaces non planes, telles que celles des nanofils. Lorsque le dépôt de catalyseur n'est pas bon conducteur électronique, il faut, avant de procéder au dépôt de ce catalyseur, déposer préalablement un conducteur électronique sur une faible épaisseur à la surface des nanofils de silicium. Ce dépôt se fait au moyen des mêmes méthodes de dépôt que celles du catalyseur. On obtient ainsi une structure supportée, notée 5 en figure 4, conductrice électronique et catalysée.

### 3) Etape 3 :

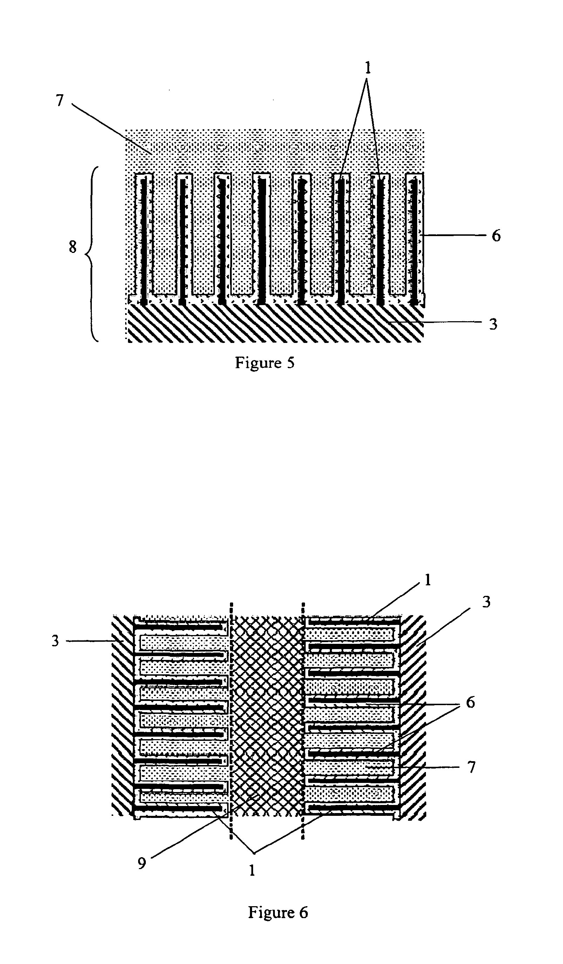

La troisième étape du procédé de fabrication d'un assemblage à deux couches actives selon l'invention est le dépôt du ionomère par coulée ou pulvérisation à partir d'une solution ou d'une suspension dans un mélange de solvants. L'ionomère utilisé ici est le Nafion®, noté 7 en figure 5.

### 4) Etape 4 :

La quatrième étape du procédé de fabrication d'un assemblage à deux couches actives selon l'invention consiste à évaporer les solvants de la solution du polymère électrolyte 7 en suspension, éventuellement par traitement thermique. On obtient alors la couche active notée 8 en figure 5, constituée des nanofils de silicium 1 liés à leur support 3, recouverts de particules de platine, 6, enrobés dans le Nafion®.

### 5) Etape 5 :

La cinquième étape du procédé de fabrication d'un assemblage à deux couches actives selon l'invention consiste à assembler, par pressage à chaud, ou collage, deux couches actives supportées, telles que celles représentées en figure 5, et la membrane conductrice protonique notée 9 en figure 6.

La membrane conductrice peut être en un polymère perfluorosulfoné tel que le Nafion^{®} ou l'Hyflon^{®}. Mais elle peut également être en un autre polymère conducteur tel qu'un polymère conducteur cationique, pour les piles à combustibles.

On obtient l'assemblage de membrane échangeuse à trois couches montrée en figure 6, constituée de deux couches actives telles que représentées en figure 5 séparées par la membrane 9.

### 6) Etape 6 :

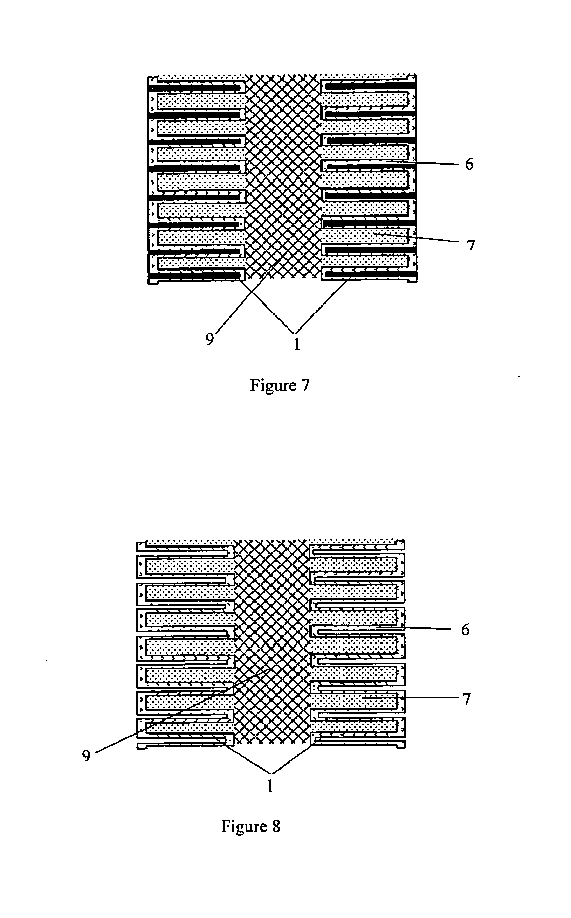

La sixième étape du procédé de fabrication d'un assemblage à deux couches actives selon l'invention consiste à retirer les supports 3 par immersion dans l'eau, ou par action mécanique, pour obtenir l'assemblage de membrane échangeuse à trois couches représenté en figure 7 et constitué des deux structures de nanofils, sans leur support, enrobées dans l'ionomère Nafion® et séparées par la membrane 9.

### 7) Etape 7 :

La septième étape du procédé de fabrication d'un assemblage à deux couches actives selon l'invention consiste à éliminer les nanostructures de silicium 1 par traitement chimique.

Pour cette élimination, plusieurs méthodes peuvent être utilisées:
- trempage dans un bain d'hydroxyde de potassium (KOH), à 25% en masse dans l'eau à 80°C, éventuellement dilué dans l'alcool isopropylique,
- trempage dans un mélange d'acide fluorydrique, HF, à 48%, acide nitrique, HNO₃ 70%, eau désionisée, acide acétique, CH₃ COOH,
- trempage dans un mélange de HF 48%, HNO₃ 70%, CH₃ COOH, ou
- trempage dans un bain de TMAH (Tétra-Méthyl-Ammonium Hydroxyde) à 25% en masse dans l'eau à 80°C.

Dans le cas de l'utilisation d'un bain de KOH ou d'un bain dans une solution de TMAH, et si l'élimination de la structure de silicium intervient plusieurs heures après le retrait de son support, une désoxydation de la base des fils de silicium est nécessaire.

Pour cela, on peut utiliser un trempage dans un bain d'une solution tamponnée de gravure d'oxyde, appelé "BOE" composé de 10% de HF environ, soit par trempage dans un bain de HF à 48% ou dilué (jusqu'à 1%).

Lorsqu'on utilise déjà un mélange d'HF à 48%, la désoxydation n'est pas nécessaire.

L'ensemble obtenu est alors, après élimination de la structure de nanofils de silicium, la membrane échangeuse de protons. Elle est rincée à l'eau. Il s'agit d'une membrane avec des couches actives à pores ouverts.

Ensuite, pour remplacer les cations provenant du traitement chimique par des protons, on immerge l'ensemble obtenu dans de l'acide sulfurique 1M ou de l'acide nitrique à 30% en poids dilué dans de l'eau à 80°C pendant une heure.

Enfin, l'ensemble est rincé dans de l'eau désionisée.

### Exemple 2 : Fabrication d'une membrane échangeuse de protons à une seule couche active.

On réalise les mêmes étapes 1 à 4 qu'à l'exemple 1, mais à la cinquième étape, on assemble une seule couche active à la membrane conductrice protonique.

On réalise ensuite les étapes 6 et 7.

### Exemple 3 : Fabrication d'un assemblage à membrane échangeuse de protons comprenant deux couches actives.

On procède comme à l'exemple 1 sauf qu'on utilise des structures de nanofils de silicium déjà réalisées.

Les nanofils de silicium utilisés peuvent être dopés n ou p pour permettre le dépôt de catalyseur par électrodépôt. Ce dopage a lieu au cours de la croissance par l'utilisation combinée de silane ou de dichlorosilane et d'un gaz précurseur du dopant. Le gaz dopant peut être de la phosphine pour obtenir des nanofils de silicium dopés n. Le diborane peut être utilisé pour obtenir des nanofils de silicium dopés p.

### Exemple 4 : Fabrication d'un assemblage à membrane échangeuse de protons.

On procède comme à l'exemple 1 sauf que la deuxième étape de dépôt du catalyseur n'est pas réalisée juste après la croissance des nanofils mais après l'étape d'élimination de ces nanofils. Le dépôt du catalyseur peut être réalisé par CVD.

### Exemple 5 :

On procède comme à l'exemple 1 sauf que l'on procède à la croissance de nanoarbres de silicium. Cela est réalisé comme décrit dans Gentile et al., Nanotechnologie, 19 (2008) page 125608.

Bien que dans les exemples qui précèdent, on ait décrit la fabrication d'un assemblage de membrane échangeuse de protons, il apparaîtra clairement à l'homme de l'art que les étapes 1 à 4 et 6 à 7 correspondent à la fabrication d'une couche active elle-même.

De la même façon, bien que l'invention ait été décrite dans les exemples qui précèdent en référence à des membranes échangeuses de protons, il apparaîtra clairement à l'homme de l'art que le procédé de fabrication des couches actives tel que décrit ci-dessus peut être utilisé pour former des pores de taille, dimensions et répartition contrôlées dans toute matrice polymère, sans ajout de catalyseurs.

## Revendications

1. Procédé de formation de pores de forme, dimensions et répartition contrôlées dans une matrice polymère, **caractérisé en ce qu'**il comprend :
- une étape d'enrobage de nanofils et/ou de nanoarbres de silicium dans la matrice polymère non polymérisée ou en suspension ou en solution dans au moins un solvant,
- une étape de durcissement de la matrice polymère, et
- une étape d'élimination des nanofils et/ou nanoarbres de silicium par traitement chimique.

2. Procédé selon la revendication 1, **caractérisé en ce que** la matrice polymère comprend au moins un ionomère.

3. Procédé selon la revendication 1 ou 2, **caractérisé en ce que** la matrice polymère est constituée d'un ionomère.

4. Procédé selon l'une quelconque des revendications 2 ou 3, **caractérisé en ce que** le ionomère est un polymère perfluorosulfoné.

5. Procédé selon la revendication 4, **caractérisé en ce qu'**elle comprend de plus une étape de croissance des nanofils et/ou nanoarbres de silicium réalisée sur un support qui est retiré entre l'étape de durcissement de la matrice polymère et l'étape d'élimination des nanofils et/ou nanoarbres du silicium par traitement chimique.

6. Procédé de fabrication d'une couche active de pile à combustible à membrane échangeuse de protons, **caractérisé en ce qu'**il comprend une étape a) de formation de pores de forme, dimensions et répartition contrôlées dans une matrice polymère par le procédé selon l'une quelconque des revendications 2 à 5 et une étape b) de dépôt d'au moins un catalyseur dans les pores ainsi formés.

7. Procédé de fabrication d'une couche active de pile à combustible à membrane échangeuse de protons, **caractérisé en ce qu'**il comprend une étape a) de formation de pores de forme, dimensions et répartition contrôlées dans une matrice polymère par le procédé selon l'une quelconque des revendications 2 à 5 et une étape b) de dépôt d'au moins un catalyseur sur les nanofils et/ou nanoarbres de silicium avant l'étape d'enrobage de ces nanofils et/ou nanoarbres de silicium dans la matrice polymère non polymérisée ou en suspension ou en solution dans au moins un solvant.

## Claims

1. Method of forming pores having a controlled shape, size and distribution in a polymer matrix, **characterised in that** it comprises:
- a step of coating silicon nano-wires and/or nano-trees in the non-polymerised polymer matrix or in suspension or in solution in at least one solvent,
- a step of curing the polymer matrix, and
- a step of removing the silicon nano-wires and/or nano-trees by chemical treatment.

2. Method as claimed in claim 1, **characterised in that** the polymer matrix comprises at least one ionomer.

3. Method as claimed in claim 1 or 2, **characterised in that** the polymer matrix consists of an ionomer.

4. Method as claimed in any of claims 2 or 3, **characterised in that** the ionomer is a perfluorosulphonated polymer.

5. Method as claimed in claim 4, **characterised in that** it further comprises a step of growing silicon nano-wires and/or nano-trees on a support which is withdrawn between the step of curing the polymer matrix and the step of removing the silicon nano-wires and/or nano-trees by chemical treatment.

6. Method of producing an active layer of a proton exchange membrane fuel cell, **characterised in that** it comprises a step a) of forming pores having a controlled shape, size and distribution in a polymer matrix by the method as claimed in any one of claims 2 to 5 and a step b) of depositing at least one catalyst in the pores thus formed.

7. Method of producing an active layer of a proton exchange membrane fuel cell, **characterised in that** it comprises a step a) of forming pores having a controlled shape, size and distribution in a polymer matrix by the method as claimed in any one of claims 2 to 5 and a step b) of depositing at least one catalyst on the silicon nano-wires and/or nano-trees prior to the step of coating these silicon nano-wires and/or nano-trees in the non-polymerised polymer matrix or in suspension or in solution in at least one solvent.

## Patentansprüche

1. Verfahren zur Bildung von Poren mit kontrollierter Form, kontrollierten Abmessungen und kontrollierter Verteilung in einer Polymermatrix, **dadurch gekennzeichnet, dass** es umfasst:
- eine Stufe des Überziehens von Nanofäden und/oder Nanobäumen aus Silicium in der Polymermatrix, die nicht polymerisiert oder in Suspension oder in Lösung in wenigstens einem Lösungsmittel ist,
- eine Stufe des Härtens der Polymermatrix und
- einer Stufe der Eliminierung der Nanofäden und/oder Nanobäume aus Silicium durch chemische Behandlung.

2. Verfahren gemäß Anspruch 1, **dadurch gekennzeichnet , dass** die Polymermatrix wenigstens ein Monomer umfasst.

3. Verfahren gemäß Anspruch 1 oder 2, **dadurch gekennzeichnet, dass** die Polymermatrix aus einem Ionomer gebildet wird.

4. Verfahren gemäß einem der Ansprüche 2 oder 3, **dadurch gekennzeichnet, dass** das Ionomer ein perfluorsulfoniertes Polymer ist.

5. Verfahren gemäß Anspruch 4, **dadurch gekennzeichnet , dass** es außerdem eine Stufe des Wachstums der Nanofäden und/oder Nanobäume aus Silicium umfasst, die auf einem Träger durchgeführt wird, der zwischen der Stufe der Härtung der Polymermatrix und der Stufe der Eliminierung der Nanofäden und/oder Nanobäume aus Silicium durch chemische Behandlung herausgenommen wird.

6. Verfahren zur Herstellung einer aktiven Schicht einer Brennstoffzelle mit Protonenaustauschermembran, **dadurch gekennzeichnet, dass** es eine Stufe a) der Bildung von Poren mit kontrollierter Form, kontrollierten Abmessungen und kontrollierter Verteilung in einer Polymermatrix durch das Verfahren gemäß einem der Ansprüche 2 bis 5 und eine Stufe b) der Abscheidung wenigstens eines Katalysators in den so gebildeten Poren umfasst.

7. Verfahren zur Herstellung einer aktiven Schicht einer Brennstoffzelle mit Protonenaustauschermembran, **dadurch gekennzeichnet, dass** es eine Stufe a) der Bildung von Poren mit kontrollierter Form, kontrollierten Abmessungen und kontrollierter Verteilung in einer Polymermatrix durch das Verfahren gemäß einem der Ansprüche 2 bis 5 und eine Stufe b) der Abscheidung wenigstens eines Katalysators auf den Nanofäden und/oder Nanobäumen aus Silicium vor der Stufe des Überziehens dieser Nanofäden und/oder Nanobäume aus Silicium in der Polymermatrix, die nicht polymerisiert oder in Suspension oder in Lösung in wenigstens einem Lösungsmittel ist, umfasst.
